# EUROPEAN PATENT APPLICATION

(11) **EP 0 750 843 A2**
(43) Date of publication of application: **02.01.1997**
(21) Application number: 96304474.8
(22) Date of filing: 17.06.1996
(51) Int. Cl.: A23C 20/00

(54) **Reduced-fat cheese-flavored snack filling**

(30) Priority: 29.06.1995 US 496600
(71) Applicant: KRAFT FOODS, INC., White Plains New York 10625 (US)
(72) Inventor: Rodgers, Charles Allen, Memphis, Tennessee 38120 (US)
(74) Representative: Eyles, Christopher Thomas

(57) **Abstract**

A low-fat, reduced-fat, or fat-free cheese-flavored filling for use in snacks, including, for example, crackers, wafers, or other shaped flour-based snack foods, is provided. The reduced-fat cheese-flavored fillings allow for snacks having texture, flavor, and mouthfeel similar to conventional snack products with significantly reduced levels of fat. The snack filling generally has less than about 15 weight percent fat, preferably less than 10 weight percent fat, and most preferably less than 2 weight percent fat. The snack filling generally contains (1) about 15 to 40 weight percent glycerine; (2) about 3 to 25 weight percent of a binding agent selected from the group consisting of maltitol, sorbitol, and corn syrup; (3) about 5 to 35 weight percent dehydrated cheese; (4) about 0.5 to 5 weight percent natural cheese flavors; (5) about 10 to 25 weight percent food starch; (6) about 0.2 to 8 weight percent of a cellulose-based thickening agent; (7) about 0 to 15 weight percent whey protein concentrate; (8) about 3 to 8 weight percent salt; and (9) about 0 to 15 weight percent water.

## Description

### Field of the Invention

The invention generally relates to the field of low-fat, reduced-fat, and/or fat-free snack products. More specifically, this invention relates to a low-fat, reduced-fat, or fat-free cheese-flavored filling for use in snacks, including, for example, crackers, wafers, toaster pastries, or other flour-based snack foods. The reduced-fat cheese-flavored fillings of this invention allow for snacks having texture, flavor, and mouthfeel similar to conventional snack products with significantly reduced levels of fat.

### Background of the Invention

The human consumption of fats in various foodstuffs contributes significantly to obesity. Snack foods, which are often eaten between meals, can represent a significant proportion of fat intake in many diets. High fat diets also contribute to various human diseases such as heart and coronary artery diseases. One method of reducing obesity and/or diseases such as heart and coronary artery diseases in the human population is to reduce the consumption of fat. In recent years, fat substitutes or low-calorie fats have attracted increasing attention as a method of reducing the fat and calorie content of foodstuffs. The objective is to provide edible fats with reduced absorption and digestive properties with minimal side effects and with acceptable taste and mouthfeel characteristics when incorporated into food compositions.

In recent years reduced-fat snack foods such as crackers have become available. Unfortunately, a suitable reduced-fat snack filling for incorporation into or for use with such snack products has not been developed. In conventional snack products having a cheese-flavored filling (*e.g*., full-fat or reduced-fat crackers with a cheese-flavored filling), the filling is generally shortening-based with various flavoring and other additives. The shortening generally acts as a binder or adhesive to hold the sandwich structure together. Since shortening is essentially 100 percent fat, the filling itself will often contain 60 to 65 weight percent fat. The resulting sandwich-type snack product using such a shortening-based filling will generally contain 25 to 40 weight percent fat even if reduced-fat crackers are used.

It would be desirable, therefore, to provide a reduced-fat cheese-flavored snack filing having low or reduced-fat content which maintain the texture, flavor, and binding characteristics normally associated with conventional full-fat cheese-flavored snack fillings. It would also be desirable to provide filled reduced-fat snacks with cheese-flavored fillings having low or reduced-fat content which maintain the texture and flavor characteristics normally associated with conventional full-fat filled snacks. The filling compositions of this invention generally provide low-fat, reduced-fat, and/or fat-free cheese-flavored filled snacks having such characteristics.

### Summary of the Invention

The present invention relates to a reduced-fat cheese-flavored snack filling. The present snack filling generally has less than about 15 weight percent fat, preferably less than about 10 weight percent fat, and most preferably less than about 2 weight percent fat. This present invention also relates to reduced-fat snack products prepared using this reduced-fat cheese-flavored snack filling. Examples of such snack products include, for example, filled flour-based crackers formed with two crackers and a layer of the present snack filling sandwiched between the crackers, whereby the snack filling bonds or adheres the crackers together; flour-based hollow cylinder-shaped or ring-shaped crackers wherein the snack filling is deposited in, and fills, the hollow space in the cracker; flour-based "puffed" crackers wherein the snack filling is deposited in, or injected into, the center of the cracker (such that the snack filling is fully or partially surrounded by the cracker); flour-based toaster pastries wherein the snack filling is deposited in, or injected into, the central portion of the pastry; and the like. As one skilled in the art will realize, other shapes and configurations (*e.g.,* multiple cracker and snack filling layers) can also be used. For purposes of this invention, the use of the generic terms "cracker" and "snack product" is intended to include generally flat crackers of any shape; curved, twisted, or oddly configured crackers; "puffed" crackers; hollow cylinder-shaped or ring-shaped crackers; chips and chip-shaped crackers; wafers; toaster pastries; and other conventionally and non-conventionally shaped flour-based snack products.

The present reduced-fat cheese-flavored snack filling can be used with full-fat, reduced-fat, or no-fat flour-based crackers or snack products. Generally, however, reduced-fat or no-fat flour-based crackers or snack products are preferred since they provide the lowest total fat content. Suitable flour-based crackers or snack products include those prepared from wheat, corn, oats, rice, multigrains, potatoes, and the like. Conventional flour-based snack products can be prepared using conventional cracker-making or other snack food-making procedures. The reduced-fat cheese-flavored snack filling can be applied to, or deposited on, the cracker using conventional techniques and equipment.

One object of the present invention is to provide a reduced-fat cheese-flavored snack filling comprising:
(1) about 15 to 40 weight percent glycerine;
(2) about 3 to 25 weight percent of a binding agent selected from the group consisting of maltitol, sorbitol, and corn syrup;
(3) about 5 to 35 weight percent dehydrated cheese;
(4) about 0.5 to 5 weight percent natural cheese flavors;
(5) about 3 tc 25 weight percent food starch;
(6) about 0.2 to 8 weight percent of a cellulose-based thickening agent;
(7) about 0 to 15 weight percent whey protein concentrate;
(8) about 3 to 8 weight percent salt; and
(9) about 0 to 15 weight percent water;
wherein the reduced-fat cheese-flavor snack filling has less than 15 weight percent fat and is effective as a filler for flour-based snack products.

Another object of the present invention is to provide a reduced-fat snack product comprising one or more flour-based crackers and at least one layer of a reduced-fat cheese-flavored filling adhered to the flour-based crackers, wherein the reduced-fat cheese-flavored filling comprises:
(1) about 15 to 40 weight percent glycerine;
(2) about 3 to 25 weight percent of a binding agent selected from the group consisting of maltitol, sorbitol, and corn syrup;
(3) about 5 to 35 weight percent dehydrated cheese;
(4) about 0.5 to 5 weight percent natural cheese flavors;
(5) about 3 to 25 weight percent food starch;
(6) about 0.2 to 8 weight percent of a cellulose-based thickening agent;
(7) about 0 to 15 weight percent whey protein concentrate;
(8) about 3 to 8 weight percent salt; and
(9) about 0 to 15 weight percent water;
wherein the reduced-fat cheese-flavor snack filling has less than 15 weight percent fat and is effective as a filling for the flour-based crackers.

Still another object of the present invention is to provide a method for preparing a reduced-fat snack product having one or more crackers and one or more layers of reduced-fat cheese-flavored filling, said method comprising:
(a) preparing a dry blend comprising (1) about 1 to 30 weight percent dehydrated cheese, (2) about 0.2 to 5 weight percent natural cheese flavors, (3) about 5 to 40 weight percent food starch, (4) about 0.1 to 12 weight percent of a cellulose-based thickening agent, (5) about 0 to 25 weight percent whey protein concentrate, and (6) about 1 to 15 weight percent salt;
(b) preparing a wet blend comprising (1) about 5 to 75 weight percent glycerine, (2) about 5 to 75 weight percent of a binding agent selected from the group consisting of maltitol, sorbitol, and corn syrup, and about 0 to 15 weight percent water;
(c) preparing a reduced-fat cheese-flavored filling by blending, shortly before use, about 20 to 75 weight percent of the dry blend, about 25 to 80 weight percent of the wet blend, and about 0 to 15 water to form a homogenous mixture which is flowable at a temperature greater than about 50°F [about 10°C];
(d) applying a predetermined amount of the reduced-fat cheese-flavored filling, shortly after its preparation, to a cracker to form at least one layer of the reduced-fat cheese-flavored filling on at least one of the crackers in the reduced-fat snack product.

These and other objects and advantages will be apparent from a consideration of the present specification.

### Detailed Description of the Invention

The reduced-fat cheese-flavored filling of this invention generally contains (1) about 15 to 40 weight percent glycerine; (2) about 3 to 25 weight percent of a binding agent selected from the group consisting of maltitol, sorbitol, and corn syrup; (3) about 5 to 35 weight percent dehydrated cheese; (4) about 0.5 to 5 weight percent natural cheese flavors; (5) about 3 to 25 weight percent food starch; (6) about 0.2 to 8 weight percent of a cellulose-based thickening agent; (7) about 0 to 15 weight percent whey protein concentrate; (8) about 3 to 8 weight percent salt; and (9) about 0 to 15 weight percent water. Other conventional food ingredients, such as flavorings, food colorings, milk solids, skim milk solids, food-grade acids, bulking agents, extenders, processing aids, vegetable oils, animal fats, preservatives, and the like, can also be added if desired. These other ingredients preferably should add little, if any, additional fat to the filling composition. Preferably, these other ingredients, if used, should be added at relatively low levels (*i.e.,* less than about 5 weight percent). Both the required and optional ingredients should, of course, be food-grade materials.

Glycerine is generally present in the present filling compositions at a level of about 15 to 40 weight percent, preferably at a level of about 20 to 30 weight percent, and more preferably at a level of about 21 to 23 weight percent. Although not wishing to be limited by theory in regard to the function or functions of any of the ingredients, it is thought that glycerine generally acts or functions as a humectant, a binding agent, and an adhesive. Glycerine is the primary binding agent in the filling compositions of this invention.

A secondary binding agent (in addition to the primary binding agent glycerine) is also present in the present filling compositions. Such a secondary binding agent is one or more compounds which are selected from the group consisting of maltitol, sorbitol, and corn syrup. Generally this secondary binding agent is present in the present filling compositions at a level of about 3 to 25 weight percent and preferably at a level of about 5 to 20 weight percent. Preferably, maltitol, when used, is present at a level of about 5 to 10 weight percent and more preferably at a level of about 7 to 8 weight percent. Preferably, sorbitol, when used, is present at a level of about 3 to 8 weight percent and more preferably at a level of about 4 to 6 weight percent. Preferably, corn syrup, when used, is present at a level of about 4 to 8 weight percent and more preferably at a level of about 5 to 7 weight percent. One, two, or all of these secondary binding agents may be present in the filling compositions of this invention. In addition to acting as binding agents, these materials also appear to act as humectants and adhesives.

Food starch, which appears to act as a moisture binding agent and a thickener, is generally present in the present filling compositions at a level of about 3 to 25 weight percent, preferably at a level of about 10 to 20 weight percent, and more preferably at a level of about 17 to 19 weight percent. Examples of suitable food starches included, for example, modified food starches from National Starch, American Maize, and A.E. Staley, and the like.

The present filling compositions also contain dehydrated cheese. Generally the dehydrated cheese, which also includes dehydrated cheese-containing products, is present at a level of about 5 to 35 weight percent, preferably at a level of about 10 to 33 weight percent, and more preferably at a level of about 20 to 30 weight percent. Two especially preferred dehydrated cheese sources are uncolored Sequoia cheese flavor powder (CV 121) and colored Sharpee cheese flavor powder (CV 100) from Kraft Food Ingredients. Preferably both Sequoia and Sharpee cheese flavors are included in the present formulations. Preferably the Sequoia cheese flavor is present at about 15 to 25 weight percent and more preferably at about 20 to 23 weight percent. Preferably the Sharpee cheese flavor is present at about 5 to 10 weight percent and more preferably at about 7 to 9 weight percent.

The Sequoia cheese flavor powder generally contains about 20 to 25 weight percent cheese, about 20 to 25 weight percent whey concentrate, about 18 to 22 weight percent reduced lactose whey, about 10 to 15 weight percent partially hydrogenated soybean oil, about 5 to 10 weight percent maltodextrin, about 2 to 5 weight percent blue cheese, about 0 to 5 weight percent salt, about 0 to 3 weight percent disodium phosphate, about 0 to 1 weight percent citric acid, and about 0 to 0.5 weight percent lactic acid. The amount of citric and lactic acids in the Sequoia formulation are adjusted to obtain a pH of about 5.85 ± 0.15 (measured as a 10% solution in water). The Sharpee cheese flavor powder generally contains about 50 to 60 weight percent colored cheddar cheese, about 20 to 30 weight percent whey concentrate, about 8 to 12 weight percent dried buttermilk, about 0 to 5 weight percent salt, about 0 to 3 weight percent disodium phosphate, about 0 to 1 weight percent lactic acid, about 0 to 0.25 weight percent FD&C Yellow No. 5, and about 0 to 0.25 weight percent FD&C Yellow No. 6. The amount of lactic acid in the Sharpee formulation is adjusted to obtain a pH of about 5.8 ± 0.2; the colorings are adjusted to obtain the desired color.

Both the Sequoia and Sharpee cheese flavor powders are prepared in essentially the same manner. A cheese mixture is prepared by grinding and blending the appropriate cheeses. After adding water (to about 50% solids) and the other ingredients, the cheese mixture is heated to about 200°F [about 93.3°C] with agitation until homogenous (usually about 7-10 minutes or more). The homogenous mixture is then dried in a conventional atomizer (inlet temperature about 3650 to 400°F [about 185° to 204.4°C]; outlet temperature about 165° to 195°F [about 73.9 to 90.6°C]). The cooled powder is then collected using a minimum 14 mesh [1.40 mm] screen.

The present filling compositions also contain natural cheese flavors at a level of about 0.5 to 5 weight percent, preferably at a level of about 0.5 to 3 weight percent, and more preferably at a level of about 0.7 to 1.5 weight percent. Especially preferred natural cheese flavors include No. 244397 from Tastemaker and Nos. 002425M and 00240S from Edlong.

The present filling compositions also contain one or more cellulose-based thickening agents at a level of about 0.2 to 8 weight percent, preferably at a level of about 1 to 6 weight percent, and more preferably at a level of about 3 to 5 weight percent. Suitable cellulose-based thickening agents include, for example, carboxymethyl cellulose, cellulose gel, cellulose gum, hydroxypropyl methylcellulose, alginate, gellan, and the like. It appears that the cellulose-based thickening agents act as thickeners, fat mimetics, and starch extenders. Especially preferred cellulose-based thickening agents include cellulose gum (LM-310 from FMC) and carboxymethyl cellulose (No. 9H4XF from Hercules), both of which are preferably present at about 1 to 6 weight percent and about 0.2 to 2 weight percent, respectively.

The present filling compositions optionally contain whey protein concentrate at a level of about 0 to 15 weight percent, preferably at a level of about 5 to 15 weight percent, and more preferably at a level of about 10 to 15 weight percent. The whey protein concentrate appears to act both as a flavoring and a protein source.

The present filling compositions also contain salt at a level of about 3 to 8 weight percent, preferably at a level of about 4 to 7 weight percent, and more preferably at a level of about 5 to 6 weight percent. Salt appears to act as a flavoring and a microbiological control agent.

The present filling compositions optionally contain water at a level of about 0 to 15 weight percent depending on the desired water activity of the reduced-fat cheese-flavored filling composition. Generally the water activity is adjusted to a level closely matching the water activity of the cracker to be used so that the cracker will not become soggy upon storage at room temperature. The water activity of the filling compositions should, however, be sufficiently high so that the mouthfeel is acceptable (*i.e.,* not too dry). Generally a water activity of about 0.3 to 0.8 for the filling composition is acceptable; preferably the water activity is about 0.3 to 0.5. Water activity is generally measured using a water activity meter such as Decagon CX-2.

If desired a vegetable oil (such as, for example, soybean oil) or an animal fat can be added to the present filing compositions to aid in lubrication. The level of such a lubricating oil is generally in the range of about 0 to 5 weight percent. Since such a lubricating oil will contribute to the fat content of the filling composition, it is generally preferred not to use such an oil unless problems arise in pumping the composition during assembly of the final snack product. Thus, most preferably the reduced-fat cheese-flavored filling does not contain significant amounts of a vegetable oil and/or animal fat as a separate ingredient.

The reduced-fat cheese-flavored snack fillings of the present invention can be prepared using conventional procedures and equipment. For example, the various ingredients, or various combinations of ingredients, can simply be combined and blended together to form a homogeneous mixture using, for example, a ribbon or other type mixer. When combined in this manner, however, the filling composition should be used relatively quickly (*i.e.,* within about 2 hours) to prevent the composition from setting up prematurely. Generally, therefore, it is preferred that the reduced-fat cheese-flavored filling be prepared and stored in two separate compositions -- a wet blend and a dry blend -- which are then combined just before use. Preferably the dry blend contains (1) about 12 to 18 weight percent dehydrated cheese, (2) about 1 to 2 weight percent natural cheese flavors. (3) about 25 to 35 weight percent food starch, (4) about 8 to 12 weight percent of a cellulose-based thickening agent, (5) about 0 to 12 weight percent whey protein concentrate, and (6) about 8 to 10 weight percent salt. Preferably the wet blend contains (1) about 50 to 60 weight percent glycerine, (2) about 25 to 50 weight percent of a binding agent selected from the group consisting of maltitol, sorbitol, and corn syrup, and about 0 to 15 weight percent water. The dry and wet blends can be prepared by separately blending each of the ingredients together using a ribbon or other mixer. The two blends can be stored separately until ready for use. In order to prepare the final filling composition, generally just before use, about 20 to 75 weight percent of the dry blend, about 25 to 80 weight percent of the wet blend, and about 0 to 15 weight percent water are blended together to form a homogenous mixture. Preferably, the final filling composition contains about 45 to 65 weight percent of the dry blend, about 35 to 55 weight percent of the wet blend, and about 0 to 15 weight percent water. Water, if required to achieve the desired water activity, can be added to either the wet blend and/or the final composition.

Once the reduced-fat cheese-flavored snack filling is prepared, a predetermined amount is deposed on the desired cracker. For example, using flat crackers to form a filled sandwich-type cracker, the filling is deposited on one cracker and the other cracker is placed on top of the deposited filling to spread the filling over the cracker surfaces and form the desired filled sandwich-type cracker. Or, for example, using a hollow cylinder-type cracker, a predetermined amount of the filling is simply deposited within, and fills, the hollow cylindrically shaped void or hole in the cracker. The reduced-fat cheese-flavored filling of this invention can be applied or deposited on the desired cracker surface using conventional equipment and techniques. The predetermined amount of reduced-fat cheese-flavored filling will, of course, vary depending on the size and shape of the cracker used and the desired thickness of the filling layer. Generally, however, for conventional crackers of the sandwich type, the predetermined amount of filling is about 1 to 2 grams and the filling thickness is about 0.1 to 0.2 inches [about 2.54 to 5.08 mm]. Amounts and thicknesses greater than or less than these values can also be used if desired.

Preferably the reduced-fat cheese flavored snack filling of this invention is flowable at a temperature greater than about 50°F [about 10°C], and preferably flowable at a temperature greater than about 65°F [about 18.3°C], to allow for easy preparation of the filled snack products. At room temperature and, preferably up to at least about 90°F [about 32.2°C] (once the filling composition has set), the filling composition is relatively firm and adheres to the cracker surface sufficient to form the desired filled snack product. The water activity of the filling composition can be adjusted, if necessary, by the addition of water. Generally the water activity of the filling composition is adjusted to a value of about 0.3 to 0.8 and preferably to a value of about 0.3 to 0.5.

The following examples are intended to further illustrate the invention and not to limit it. Percentages in the example and throughout the specification are given in weight percent unless specified otherwise.

### Example 1

Two reduced-fat cheese-flavored snack filling compositions (Formulas A and B) were prepared using the following ingredients:

| No. | Ingredient | Formula A | Formula B |
|---|---|---|---|
| 1 | Uncolored Sequoia Powder | 22.0% | 22.0% |
| 2 | Glycerine | 20.0% | 20.0% |
| 3 | Modified Food Starch | 17.0% | 17.0% |
| 4 | Corn Syrup | 12.0% | 12.0% |
| 5 | Colored Sharpee Powder | 8.0% | 8.0% |
| 6 | Partially Hydrogenated Soybean Oil | 5.0% | 5.0% |
| 7 | Sorbitol | 5.0% | 5.0% |
| 8 | Salt | 5.0% | 5.0% |
| 9 | Cellulose Gum | 4.0% | 4.0% |
| 10 | Carboxymethyl Cellulose | 1.0% | 1.0% |
| 11 | Natural Flavor | 1.0% | 1.0% |
| 12 | Water | 0 | 15.0% |

The uncolored Sequoia powder was from Kraft Food Ingredients (Product No. 9399); it was a dehydrated blend of 26.13% granular and blue cheeses (milk, cheese culture, salt, enzymes); 22.21% whey; 20.33% reduced lactose whey; 13.53% partially hydrogenated soybean oil; 8.44% maltodextrin; 5.26% salt; 3.00% sodium phosphate; 0.90% citric acid; and 0.20% lactic acid. The glycerine 5 was Optim (99.7%) from Dow Chemical Co. The modified food starch was Polar Gel 18 from American Maize. The corn syrup was ISO Sweet 5500 from A.E. Staley. The colored Sharpee powder was from Kraft Food Ingredients (Product No. 950503); it was a dehydrated blend of 57.42% cheddar cheese (milk, cheese culture, salt, enzymes, artificial color); 25.00% whey; 10.02% buttermilk; 3.88% salt; 3.00% sodium phosphate; 0.44% lactic acid; 0.14% FD&C Yellow No. 5; and 0.10% FD&C Yellow No. 6. Partially hydrogenated soybean oil was from Kraft Food Ingredients (BR-9 (I-0329)). Sorbitol was from ICI Americas (Sorbo 70%). Cellulose gum was Avicel LM-310 from FMC Corp. Carboxymethyl cellulose was from Hercules Corp. (No. 9H4XF). The natural cheese flavor was Tastemaker No. 244397.

A dry blend consisting of ingredients 1, 3, 5, 8, 9, 10, and 11 was prepared in a ribbon mixer. A wet blend consisting of ingredients 2, 4, 6, 7, and 12 was prepared by blending ingredients 2, 4, 7, and 12 in a ribbon mixer and then blending in melted ingredient 6 (preferably heated to about 100° to 105°F [about 37.8 to 40.6°C]). The reduced-fat cheese-flavored snack filling compositions were prepared by blending about 60 weight percent dry blend and about 40 weight percent wet blend in a ribbon mixture. The filling compositions can be deposited on crackers using conventional food handling equipment.

The filling compositions prepared using Formulas A and B differ only in the amount of added water. Each filling composition contains less than 15 weight percent fat. Formula A has low water activity (about 0.4); Formula B has moderate water activity (about 0.6).

### Example 2

A wet blend containing 55.0 weight percent glycerin, 15.0 weight percent corn syrup, 10 weight percent sorbitol, and 20.0 weight percent maltitol was prepared by blending the ingredients together at about 75°F [about 23.9°C in a ribbon mixer to obtain a homogenous blend. A dry blend containing 31.8 weight percent uncolored Sequoia powder, 10 weight percent whey protein concentrate, 11.7 weight percent colored Sharpee powder, 30 weight percent modified food starch, 8.3 weight percent salt, 6.7 weight percent cellulose gel, 1.5 weight percent natural cheese flavor, and 0.3 weight percent carboxymethyl cellulose was prepared by blending the ingredients together at about 72°F [about 22.2°C] in a Lightning' mixer to obtain a homogeneous mixture. The source and identity of the ingredients are as described in Example 1. The whey protein concentrate was 35% protein No. 522-0470-302 from Kraft Foods.

The reduced-fat cheese-flavored filling was prepared by blending 60 weight percent of the dry blend and 40 weight percent of the wet blend in a ribbon mixer until a homogeneous mixture was obtained. Preferably the filling is used shortly after the final blending step. The filling composition contained less than 14 weight percent fat and had a water activity of about 0.4. The filling composition of this example does not contain vegetable oil as a separate ingredient. It will, therefore, generally contain less fat than the compositions of Example 1.

## Claims

1. A reduced-fat cheese-flavored snack filling comprising:
(1) 15 to 40 weight percent glycerine;
(2) 3 to 25 weight percent of a binding agent selected from maltitol, sorbitol, and corn syrup;
(3) 5 to 35 weight percent dehydrated cheese;
(4) 0.5 to 5 weight percent natural cheese flavors;
(5) 3 to 25 weight percent food starch;
(6) 0.2 to 8 weight percent of a cellulose-based thickening agent;
(7) 0 to 15 weight percent whey protein concentrate;
(8) 3 to 8 weight percent salt; and
(9) 0 to 15 weight percent water;
wherein the reduced-fat cheese-flavor snack filling has less than 15 weight percent fat and is effective as a filler for flour-based snack products.

2. A reduced-fat cheese-flavored snack filling according to claim 1, wherein the amount of water is adjusted to achieve a water activity of 0.3 to 0.8.

3. A reduced-fat cheese-flavored snack filling according to claim 1 or claim 2, wherein the snack filling contains (1) 20 to 30 weight percent glycerine; (2) 5 to 20 weight percent of the binding agent; (3) 10 to 33 weight percent dehydrated cheese; (4) 0.5 to 3 weight percent natural cheese flavors; (5) 10 to 20 weight percent food starch; (6) 1 to 6 weight percent of the cellulose-based thickening agent; (7) 0 to 15 weight percent whey protein concentrate; (8) 4 to 7 weight percent salt; and (9) 0 to 15 weight percent water.

4. A reduced-fat cheese-flavored snack filling according to claim 3, wherein the whey protein concentrate is present at 5 to 15 weight percent and the amount of water is adjusted to achieve a water activity of 0.3 to 0.8.

5. A reduced-fat cheese-flavored snack filling according to any one of claims 1 to 4, wherein the amount of water is adjusted to achieve a water activity of 0.3 to 0.5.

6. A reduced-fat cheese-flavored snack filling according to any one of claims 1 to 5, wherein the reduced-fat cheese-flavor snack filling has less than 10 weight percent fat.

7. A reduced-fat cheese-flavored snack filling according to claim 6, wherein the reduced-fat cheese-flavor snack filling has less than 2 weight percent fat.

8. A reduced-fat cheese-flavored snack product comprising one or more flour-based crackers and, adhered to the flour-based crackers, at least one layer of a reduced-fat cheese-flavored filling according to any one of claims 1 to 7.

9. A method for preparing a reduced-fat snack product having one or more crackers and one or more layers of reduced-fat cheese-flavored filling, said method comprising:
(a) preparing a dry blend comprising (1) 1 to 30 weight percent dehydrated cheese, (2) 0.2 to 5 weight percent natural cheese flavors, (3) 5 to 40 weight percent food starch, (4) 0.1 to 12 weight percent of a cellulose-based thickening agent, (5) 0 to 25 weight percent whey protein concentrate, and (6) 1 to 15 weight percent salt;
(b) preparing a wet blend comprising (1) 5 to 75 weight percent glycerine, (2) 5 to 75 weight percent of a binding agent selected from maltitol, sorbitol, and corn syrup, and 0 to 15 weight percent water;
(c) preparing a reduced-fat cheese-flavored filling by blending, shortly before use, 20 to 75 weight percent of the dry blend, 25 to 80 weight percent of the wet blend, and 0 to 15 weight percent of water to form a homogenous mixture which is flowable at a temperature greater than about 50°F [about 10°C] ;
(d) applying a predetermined amount of the reduced-fat cheese-flavored filling, shortly after its preparation, to a cracker to form at least one layer of the reduced-fat cheese-flavored filling on at least one of the crackers in the reduced-fat snack product.

10. A method according to claim 9, wherein the dry blend contains (1) 12 to 18 weight percent dehydrated cheese, (2) 1 to 2 weight percent natural cheese flavors, (3) 25 to 35 weight percent food starch, (4) 8 to 12 weight percent of the cellulose-based thickening agent, (5) 0 to 12 weight percent whey protein concentrate, and (6) 8 to 10 weight percent salt; and wherein the wet blend contains (1) 50 to 60 weight percent glycerine, (2) 25 to 50 weight percent of the binding agent, and 0 to 15 weight percent water.

11. A method according to claim 9 or claim 10, wherein the reduced-fat cheese-flavored filling is prepared by blending, shortly before use, 45 to 65 weight percent of the dry blend, 35 to 55 weight percent of the wet blend, and 0 to 15 weight percent water to form a homogenous mixture which is flowable at a temperature greater than about 65°F [about 18.3°C].

12. A method according to any one of claims 9 to 11, wherein the water content of the reduced-fat cheese-flavored filling is adjusted to obtain a water activity of 0.3 to 0.8.

13. A method according to claim 12, wherein the water content of the reduced-fat cheese-flavored filling is adjusted to obtain a water activity of about 0.3 to 0.5.
